# FASCICULE DE BREVET EUROPEEN

(11) **EP 4 377 150 B1**
(45) Date de publication et mention de la délivrance du brevet: **27.08.2025**
(21) Numéro de dépôt: 22726455.3
(22) Date de dépôt: 29.04.2022
(51) Int. Cl.: B60N 2/58

(54) **COIFFE DE REVÊTEMENT D'UN BLOC DE REMBOURRAGE ÉLASTIQUEMENT COMPRESSIBLE DE MATELASSURE DE SIÈGE DE VÉHICULE AUTOMOBILE**
BEZUG ZUM ABDECKEN EINES BLOCKS AUS ELASTISCH KOMPRIMIERBAREM POLSTER ZUR POLSTERUNG EINES KRAFTFAHRZEUGSITZES
COVER FOR COVERING A BLOCK OF ELASTICALLY COMPRESSIBLE PADDING UPHOLSTERING A MOTOR VEHICLE SEAT CUSHION

(30) Priorité: 26.07.2021 FR 2108092
(43) Date de publication de la demande: 05.06.2024
(73) Titulaire: TESCA Pacific, 92977 Paris La Défense Cedex (FR)
(72) Inventeur: PERIANES, Sergio, 92977 Paris La Défense Cedex (FR)
(74) Mandataire: Sayettat, Julien Christian
(86) Numéro de dépôt international: PCT/EP2022/061508
(87) Numéro de publication internationale: WO 2023/006265

(56) Documents cités:
- DE-A1- 19 847 334
- DE-C1- 19 649 427

## Description

L'invention concerne une coiffe de revêtement d'un bloc de rembourrage élastiquement compressible de matelassure de siège de véhicule automobile et une matelassure comprenant une telle coiffe. Un exemple de coiffe de revêtement est décrit dans le document DE 198 47 334 A1.

Il est connu de réaliser une coiffe de revêtement d'un bloc de rembourrage élastiquement compressible de matelassure de siège de véhicule automobile, ladite coiffe étant à base de textile tricoté, ladite coiffe étant pourvue d'au moins un élément d'ancrage destiné à s'accrocher à un élément d'ancrage complémentaire issu dudit bloc ou de l'armature dudit siège pour assurer un rappel de ladite coiffe vers ledit bloc.

Un intérêt de réaliser une coiffe par tricotage est de pouvoir lui conférer une forme tridimensionnelle apte à épouser la forme du bloc de rembourrage, ce qui permet d'éviter, ou de limiter, des opérations de couture visant à associer entre eux une pluralité de formats de matériau de revêtement.

Par ailleurs, la présence d'éléments d'ancrage permet d'assurer une fixation de la coiffe au bloc de rembourrage et/ou à l'armature tout en permettant son placage sur ledit bloc, notamment en zone concave.

Usuellement, un élément d'ancrage est intégré à la coiffe par un moyen de fixation tel qu'une couture, ce qui complexifie la réalisation de ladite coiffe. Par ailleurs, l'intégration de l'élément d'ancrage dans la coiffe peut être visible en face d'aspect de ladite coiffe, ce qui est inesthétique.

L'invention a pour but de pallier ces inconvénients.

A cet effet, et selon un premier aspect, l'invention propose une coiffe de revêtement d'un bloc de rembourrage élastiquement compressible de matelassure de siège de véhicule automobile, ladite coiffe étant à base de textile tricoté, ladite coiffe étant pourvue d'au moins un élément d'ancrage destiné à s'accrocher à un élément d'ancrage complémentaire issu dudit bloc ou de l'armature dudit siège pour assurer un rappel de ladite coiffe vers ledit bloc, ladite coiffe comprenant :
- une couche d'endroit et une couche d'envers obtenues par tricotage, lesdites couches étant tricotées ensemble de manière à s'associer entre elles par tricotage selon toute leur surface à l'exception d'au moins une zone où elles ne sont pas associées entre elles de manière à définir un logement,
- ledit logement est pourvu d'au moins une fenêtre issue de tricotage destinée à permettre l'accrochage dudit élément d'ancrage complémentaire, ladite fenêtre étant ménagée dans ladite couche d'envers,
- ledit élément d'ancrage est inséré dans ledit logement.

Avec l'agencement proposé, la fixation de l'élément d'ancrage se fait par simple insertion dans un logement issu de l'opération de tricotage de la coiffe, la fenêtre étant elle aussi issue de tricotage, ce qui simplifie la réalisation de ladite coiffe.

Par ailleurs, l'intégration de l'élément d'ancrage dans la coiffe est non visible en face d'aspect de ladite coiffe.

Selon un deuxième aspect, l'invention propose une matelassure comprenant une telle coiffe.

D'autres particularités et avantages de l'invention apparaîtront dans la description qui suit, faite en référence aux figures jointes, dans lesquelles :
[Fig.1] est une vue schématique en perspective partielle éclatée d'une matelassure pourvue d'une coiffe selon une réalisation,
[Fig.2] est une vue schématique en coupe partielle non éclatée de la matelassure de la figure 1,
[Fig.3] est une vue schématique partielle en perspective montrant l'envers d'une coiffe selon un premier mode de réalisation,
[Fig.4] est une vue schématique partielle en perspective montrant l'envers d'une coiffe selon un deuxième mode de réalisation,
[Fig.5] est une vue schématique de face de l'envers d'une coiffe combinant les modes de réalisation des figures 3 et 4,
[Fig.6] est une vue schématique partielle en perspective montrant un élément d'ancrage et un élément d'ancrage complémentaire associés entre eux selon une variante de réalisation des figures 1 et 2.

En référence aux figures, on décrit une coiffe 1 de revêtement d'un bloc 2 de rembourrage élastiquement compressible - par exemple en mousse de polyuréthanne moulée, ou encore en matériau fibreux - de matelassure 15 de siège de véhicule automobile, ladite coiffe étant à base de textile tricoté, ladite coiffe étant pourvue d'au moins un élément d'ancrage 3 destiné à s'accrocher à un élément d'ancrage complémentaire 4 issu dudit bloc ou de l'armature dudit siège (non représentée) pour assurer un rappel de ladite coiffe vers ledit bloc, ladite coiffe comprenant :
- une couche d'endroit 5 et une couche d'envers 6 obtenues par tricotage, lesdites couches étant tricotées ensemble de manière à s'associer entre elles par tricotage selon toute leur surface à l'exception d'au moins une zone désolidarisée 7 où elles ne sont pas associées entre elles de manière à définir un logement 8,
- ledit logement est pourvu d'au moins une fenêtre 9 issue de tricotage destinée à permettre l'accrochage dudit élément d'ancrage complémentaire, ladite fenêtre étant ménagée dans ladite couche d'envers,
- ledit élément d'ancrage est inséré dans ledit logement.

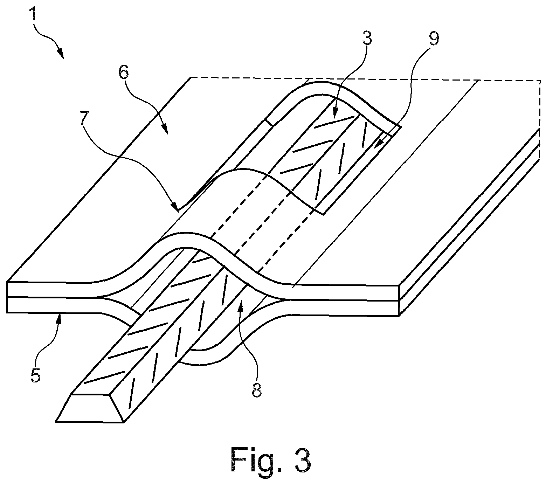

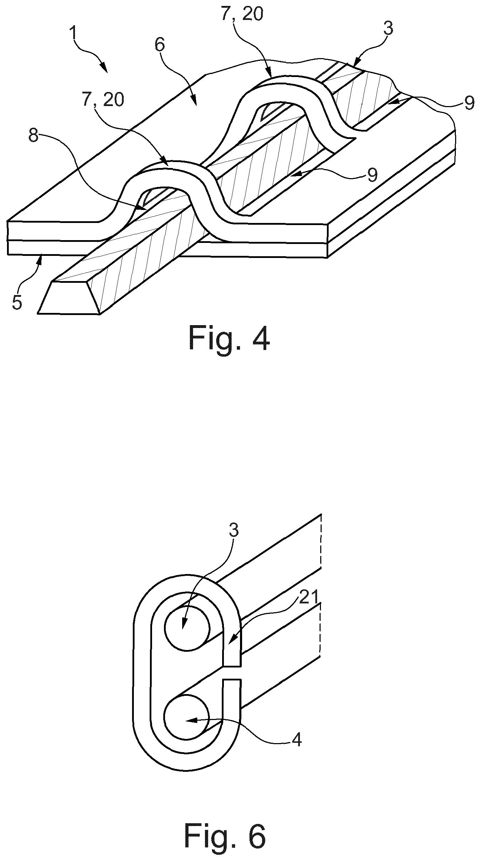

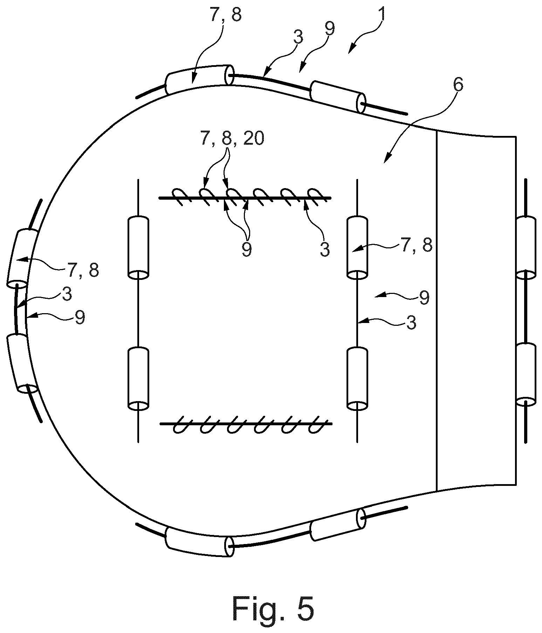

Selon diverses réalisations, une zone désolidarisée 7 se présente :
- sous une forme allongée (s'étendant notamment selon une direction rectiligne) pourvue d'une ou plusieurs fenêtres 9, comme représenté en figures 3 et 5,
- ou bien sous la forme d'une pluralité de boucles 20 successives (se succédant notamment selon une direction rectiligne), les espaces entre lesdites boucles définissant une pluralité de fenêtres 9, comme représenté en figures 4 et 5,
l'élément d'ancrage 3 étant sous la forme d'une tige - formée par exemple par un fil métallique ou par un profilé en matériau plastique -, de manière à permettre un rappel de la coiffe 1 selon une ligne par accrochage dudit élément à au moins un élément d'ancrage complémentaire 4.

Selon une réalisation non représentée, l'élément d'ancrage 3 s'étend de part et d'autre de la coiffe 1 selon deux bords opposés de ladite coiffe, de manière à réaliser un rappel selon toute une dimension de ladite coiffe.

Selon une réalisation non représentée, le logement 8 est agencé de manière à recevoir un élément d'ancrage 3 non allongé - par exemple sous forme de doigt métallique ou en matériau plastique -, de manière à permettre un rappel ponctuel de la coiffe 1 par accrochage dudit élément à un seul élément d'ancrage complémentaire 4.

On décrit à présent une matelassure 15 de siège de véhicule automobile comprenant une telle coiffe 1, ladite matelassure comprenant en outre un bloc 2 de rembourrage élastiquement compressible, ladite coiffe étant chaussée sur ledit bloc, ledit bloc étant pourvu d'au moins un élément d'ancrage complémentaire 4 s'accrochant à un élément d'ancrage 3 de manière à rappeler ladite coiffe vers ledit bloc.

En particulier, comme représenté en figues 1 et 2, l'élément d'ancrage 3 s'étend en regard d'une gorge 10 prévue dans le bloc 2 de rembourrage, un tel agencement permettant notamment de réaliser un marquage décoratif.

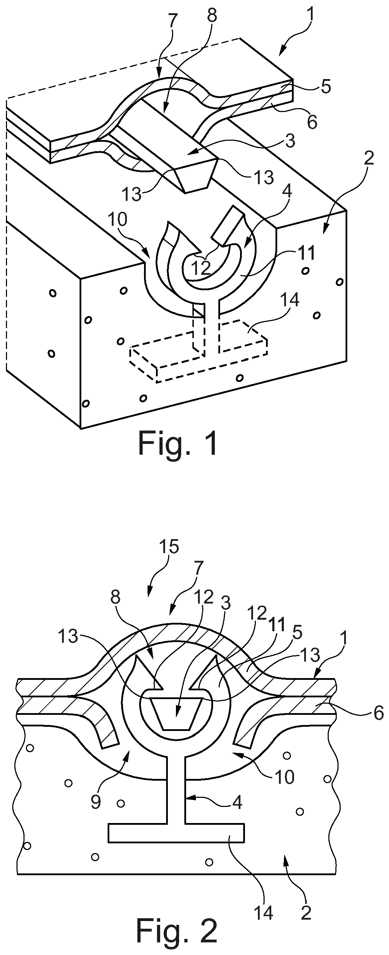

Selon la réalisation représentée en figures 1 et 2, un élément d'ancrage complémentaire 4 comprend une partie d'accrochage 11 en forme générale de Ω élastiquement déformable agencée de manière à permettre une insertion en force de l'élément d'ancrage 3 à l'intérieur et son maintien dans ladite partie - ici au moyen de harpons 12 coopérant avec des parties anguleuses 13 en vue en coupe conférées à l'élément d'accrochage 3.

Selon la variante de réalisation représentée schématiquement en figure 6, un élément d'ancrage complémentaire 4 est sous forme d'une tige - formée par exemple par un fil métallique ou par un profilé en matériau plastique - l'élément d'ancrage 3 étant également sous forme d'une tige, un anneau métallique 21 en forme générale de C ayant été refermé en force pour recevoir lesdits éléments d'ancrage et d'ancrage complémentaire.

De façon non représentée, on pourrait prévoir un agencement similaire en rendant l'élément d'ancrage complémentaire 4 solidaire de l'armature du siège, et non du bloc 2, un tel agencement étant notamment applicable au cas d'un élément d'ancrage 3 disposé en périphérie de la coiffe 1 pour coopérer avec ledit élément d'ancrage complémentaire.

Selon une réalisation, telle que représentée en figures 1 et 2, le bloc 2 de rembourrage est à base de mousse moulée, un élément d'ancrage complémentaire 4 comprenant une partie d'ancrage 14 - ici sous forme de plaque permettant un ancrage efficace dans ledit bloc - dans la mousse, ladite partie étant surmoulée par ledit bloc.

## Revendications

1. Coiffe (1) de revêtement d'un bloc (2) de rembourrage élastiquement compressible de matelassure (15) de siège de véhicule automobile, ladite coiffe étant à base de textile tricoté, ladite coiffe étant pourvue d'au moins un élément d'ancrage (3) destiné à s'accrocher à un élément d'ancrage complémentaire (4) issu dudit bloc ou de l'armature dudit siège pour assurer un rappel de ladite coiffe vers ledit bloc, ladite coiffe étant **caractérisée en ce qu'**elle comprend :
• une couche d'endroit (5) et une couche d'envers (6) obtenues par tricotage, lesdites couches étant tricotées ensemble de manière à s'associer entre elles par tricotage selon toute leur surface à l'exception d'au moins une zone désolidarisée (7) où elles ne sont pas associées entre elles de manière à définir un logement (8),
• ledit logement est pourvu d'au moins une fenêtre (9) issue de tricotage destinée à permettre l'accrochage dudit élément d'ancrage complémentaire, ladite fenêtre étant ménagée dans ladite couche d'envers,
• ledit élément d'ancrage est inséré dans ledit logement.

2. Coiffe selon la revendication 1, **caractérisée en ce qu'**une zone désolidarisée (7) se présente :
• sous une forme allongée pourvue d'une ou plusieurs fenêtres (9),
• ou bien sous la forme d'une pluralité de boucles (20) successives, les espaces entre lesdites boucles définissant une pluralité de fenêtres (9),
l'élément d'ancrage (3) étant sous la forme d'une tige, de manière à permettre un rappel de la coiffe (1) selon une ligne par accrochage dudit élément à au moins un élément d'ancrage complémentaire (4).

3. Coiffe selon la revendication 1, **caractérisée en ce que** le logement (8) est agencé de manière à recevoir un élément d'ancrage (3) non allongé, de manière à permettre un rappel ponctuel de ladite coiffe par accrochage dudit élément à un seul élément d'ancrage complémentaire (4).

4. Matelassure (15) de siège de véhicule automobile comprenant une coiffe (1) selon l'une quelconque des revendications précédentes, ladite matelassure comprenant en outre un bloc (2) de rembourrage élastiquement compressible, ladite coiffe étant chaussée sur ledit bloc, ledit bloc étant pourvu d'au moins un élément d'ancrage complémentaire (4) s'accrochant à un élément d'ancrage (3) de manière à rappeler ladite coiffe vers ledit bloc.

5. Matelassure selon la revendication précédente, **caractérisée en ce que** l'élément d'ancrage (3) s'étend en regard d'une gorge (10) prévue dans le bloc (2) de rembourrage.

6. Matelassure selon l'une des revendications 4 ou 5, **caractérisée en ce qu'**un élément d'ancrage complémentaire (4) comprend une partie d'accrochage (11) en forme générale de Ω élastiquement déformable agencée de manière à permettre une insertion en force de l'élément d'ancrage (3) à l'intérieur et son maintien dans ladite partie.

7. Matelassure selon l'une quelconque des revendications 4 ou 5, quand elle se rattache à la revendication 2, **caractérisée en ce qu'**un élément d'ancrage complémentaire (4) est sous forme d'une tige, l'élément d'ancrage (3) étant également sous forme d'une tige, un anneau métallique (21) en forme générale de C ayant été refermé en force pour recevoir lesdits éléments d'ancrage et d'ancrage complémentaire.

8. Matelassure selon l'une quelconque des revendications 4 à 7, **caractérisée en ce que** le bloc (2) de rembourrage est à base de mousse moulée, un élément d'ancrage complémentaire (4) comprenant une partie d'ancrage (14) dans la mousse, ladite partie étant surmoulée par ledit bloc.

## Patentansprüche

1. Bezug (1) eines Blocks (2) aus elastisch komprimierbarem Polster zur Polsterung (15) eines Kraftfahrzeugsitzes, wobei der Bezug auf Basis eines gestrickten Textils ist, wobei der Bezug mit mindestens einem Verankerungselement (3) versehen ist, das dazu bestimmt ist, sich an einem komplementären Verankerungselement (4) einzuhaken, das aus dem Block oder dem Gestell des Sitzes stammt, um ein Rückholen des Bezugs in Richtung des Blocks zu gewährleisten, wobei der Bezug **dadurch gekennzeichnet ist, dass** er Folgendes umfasst:
• eine vorderseitige Lage (5) und eine kehrseitige Lage (6), die durch Stricken erlangt werden, wobei die Lagen zusammengestrickt sind, um sie durch Stricken entlang ihrer gesamten Oberfläche untereinander zu assoziieren, mit Ausnahme von mindestens einem gelösten Bereich (7), in dem sie nicht miteinander assoziiert sind, um eine Aufnahme (8) zu definieren,
• wobei die Aufnahme mit mindestens einem aus Stricken stammenden Fenster (9) versehen ist, das dazu bestimmt ist, das Einhaken des komplementären Verankerungselements zu ermöglichen, das Fenster in der kehrseitigen Lage ausgebildet ist,
• das Verankerungselement in die Aufnahme eingeführt ist.

2. Bezug nach Anspruch 1, **dadurch gekennzeichnet, dass** ein gelöster Bereich (7) wie folgt vorliegt:
• in einer länglichen Form, die mit einem oder mehreren Fenstern (9) versehen ist,
• oder in Form einer Vielzahl von aufeinanderfolgenden Schleifen (20), wobei die Zwischenräume zwischen den Schleifen eine Vielzahl von Fenstern (9) definieren, wobei das Verankerungselement (3) in Form eines Stabs ist, um ein Rückholen des Bezugs (1) entlang einer Linie durch Einhaken des Elements an mindestens einem komplementären Verankerungselement (4) zu ermöglichen.

3. Bezug nach Anspruch 1, **dadurch gekennzeichnet, dass** die Aufnahme (8) angeordnet ist, um ein nicht längliches Verankerungselement (3) aufzunehmen, um ein stellenweises Rückholen des Bezugs durch Einhaken des Elements an einem einzelnen komplementären Verankerungselement (4) zu ermöglichen.

4. Polsterung (15) eines Kraftfahrzeugsitzes, umfassend einen Bezug (1) nach einem der vorhergehenden Ansprüche, der Bezug ferner umfassend einen Block (2) aus elastisch komprimierbarer Auspolsterung, wobei der Bezug auf den Block aufgezogen ist, wobei der Block mit mindestens einem komplementären Verankerungselement (4) versehen ist, das sich an einem Verankerungselement (3) einhakt, um den Bezug in Richtung des Blocks rückzuholen.

5. Polsterung nach dem vorhergehenden Anspruch, **dadurch gekennzeichnet, dass** das Verankerungselement (3) sich gegenüber einer Nut (10) erstreckt, die in dem Block (2) der Auspolsterung bereitgestellt ist.

6. Polsterung nach einem der Ansprüche 4 oder 5, **dadurch gekennzeichnet, dass** ein komplementäres Verankerungselement (4) einen allgemein Ω-förmigen, elastisch verformbaren Einhakabschnitt (11) umfasst, der angeordnet ist, um ein Einführen des Verankerungselements (3) durch Krafteinwirkung in das Innere und dessen Halten in dem Abschnitt zu ermöglichen.

7. Polsterung nach einem der Ansprüche 4 oder 5, wenn verbunden mit Anspruch 2, **dadurch gekennzeichnet, dass** ein komplementäres Verankerungselement (4) in Form eines Stabs ist, wobei das Verankerungselement (3) auch in Form eines Stabs ist, ein allgemein C-förmiger Metallring (21) durch Krafteinwirkung geschlossen wurde, um die Verankerungselemente und ergänzenden Verankerungselemente aufzunehmen.

8. Polsterung nach einem der Ansprüche 4 bis 7, **dadurch gekennzeichnet, dass** der Block (2) der Auspolsterung auf Formschaumstoff basiert, ein komplementäres Verankerungselement (4) umfassend einen Verankerungsabschnitt (14) in dem Schaumstoff, wobei der Abschnitt durch den Block überformt ist.

## Claims

1. Cover (1) for covering a block (2) of elastically compressible padding upholstering a motor vehicle seat cushion (15), said cover being made of a knitted textile, said cover being provided with at least one anchoring element (3) intended to fasten into a complementary anchoring element (4) protruding from said block or from the framework of said seat to ensure a return of said cover toward said block, said cover being **characterized in that** it comprises:
• a right-side layer (5) and a reverse-side layer (6) obtained by knitting, said layers being knitted together so that they are attached to one another through knitting along their entire surface with the exception of at least one unattached zone (7) where they are not attached to one another, so that they define a housing (8),
• said housing is provided with at least one window (9) formed as a result of the knitting operation, and intended to allow the fastening of said complementary anchoring element, said window being formed in said reverse-side layer,
• said anchoring element is inserted into said housing.

2. Cover according to claim 1, **characterized in that** an unattached zone (7) is:
• in the form of an elongated portion provided with one or more windows (9),
• or in the form of a plurality of successive loops (20), the spaces between said loops defining a plurality of windows (9),
the anchoring element (3) being in the form of a rod, in such a way as to allow a linear return of the cover (1) by fastening said element onto at least one complementary anchoring element (4).

3. Cover according to claim 1, **characterized in that** the housing (8) is arranged to receive a non-elongated anchoring element (3), so as to allow a localized return of said cover by fastening said element onto a single complementary anchoring element (4).

4. Cushion (15) for a motor vehicle seat comprising a cover (1) according to any one of the preceding claims, said cushion further comprising a block (2) of elastically compressible padding, said cover being fitted over said block, said block being provided with at least one complementary anchoring element (4) fastening onto an anchoring element (3) so as to return said cover toward said block.

5. Cushion according to the preceding claim, **characterized in that** the anchoring element (3) extends facing a groove (10) provided in the padding block (2).

6. Cushion according to either claim 4 or 5, **characterized in that** a complementary anchoring element (4) comprises a fastening portion (11) having a generally Ω-shaped form that is elastically deformable and arranged to allow a snap-fit insertion of the anchoring element (3) into it and its retention within said portion.

7. Cushion according to any one of claims 4 or 5, when depending on claim 2, **characterized in that** a complementary anchoring element (4) is in the form of a rod, the anchoring element (3) also being in the form of a rod, a C-shaped metal ring (21) having been forcibly closed to retain said anchoring and complementary anchoring elements.

8. Cushion according to any one of claims 4 to 7, **characterized in that** the padding block (2) is made of molded foam, a complementary anchoring element (4) comprising a portion (14) for anchoring in the foam, said portion being overmolded by said block.
